# EUROPEAN PATENT SPECIFICATION

(11) **EP 2 200 891 B1**
(45) Date of publication and mention of the grant of the patent: **22.01.2014**
(21) Application number: 07838609.1
(22) Date of filing: 21.09.2007
(51) Int. Cl.: B62K 3/00

(54) **SIDE MOVEMENT PROPELLED SCOOTER DEVICE HAVING EXPANDED FOOT PLATFORM**
MOTORROLLERVORRICHTUNG MIT SEITENBEWEGUNGSANTRIEB UND ERWEITERTER FUSSABLAGE
DISPOSITIF DE TROTTINETTE PROPULSÉ PAR UN MOUVEMENT LATÉRAL AYANT UNE PLATE-FORME EXTENSIBLE POUR LES PIEDS

(43) Date of publication of application: 30.06.2010
(73) Proprietor: Razor USA LLC, Cerritos, CA 90703 (US)
(72) Inventor: SHANE, Chen, Camas, WA 98607 (US)
(74) Representative: Gorman, Francis Fergus
(86) International application number: PCT/US2007/020439
(87) International publication number: WO 2009/041933

(56) References cited:
- WO-A2-2007/069879
- DE-U1- 20 214 457
- US-A- 4 165 093
- US-A- 4 540 192
- US-A1- 2002 140 193
- US-A1- 2004 075 230
- US-A1- 2007 170 666
- US-A1- 2007 170 686

## Description

### FIELD OF THE INVENTION

The present invention relates to scooters and, more specifically, to those having three or more wheels and which may be propelled by sideways movement of the user.

### BACKGROUND OF THE INVENTION

Various self-propelled and motorized scooters are known in the art. These include two wheeled, three wheeled and other multi-wheeled embodiments.

Known three wheeled scooter embodiments include those disclosed in: U.S. Patent no. 4,540,192, issued to Shelton for a Three-Wheeled Scooter-Type Vehicle ('192 patent); U.S. Patent no. 5,039,121, issued to Holter. for a Tri-Skater ('121 patent); U.S. Patent no. 6,908,090, issued to Chuang for a Cambering Vehicle Having Inclined Pivot Axle ('090 patent); and U.S. Patent no. 6,976,687 for a Cambering Vehicle and Mechanism ('687 patent).

The '192 patent discloses a scooter having two rear wheel frame members, each with a narrow foot placement area, that can be moved between a first adjacent position and a second spaced position. The two rear wheels are each mounted with a spring that biases them in the line of direction of their respective frame members. The bias arrangement also allows movement of the wheels out:of this line of direction, while returning them in the absence of a displacement force. This arrangement permits forward movement of the scooter when the user shifts his or her weight from side to side. The foot placement areas are sunken below their respective rear wheels making stepping on or off the foot areas from the rear disadvantageously difficult.

The '121 patent discloses a scooter device similarly possessing narrow foot placement platforms, yet with tilted caster rear wheels instead of spring biased rear wheels. This "tilted caster" arrangement has an effect similar to that of the '192 patent, biasing the wheels in the line of direction of the frame member (if aligned therewith) and permitting forward propulsion of the scooter device in response to side to side movement of the user. The foot placement platforms are disadvantageously narrow and run substantially longitudinally, not permitting ready side to side (lateral) positioning by a user on the device.

The '090 patent discloses a scooter device that possesses narrow foot placement platforms and does not utilize spring biased or tilted caster rear wheels. The '090 patent does disclose a scooter device that has a tiltable frame. The tiltable frame permits the steering assembly and wheels to tilt slightly, in parallel, permitting a user to lean the scooter into a turn, etc., thereby enhancing the riding experience. The platforms are disadvantageously small and do not promote lateral positioning by a user.

The '687 patent also discloses a scooter device having narrow foot placement platforms. The '687 patent utilizes discloses a scooter device that uses a yoke and linkage arrangement that permits the steering mechanism and wheels to tilt in parallel, permitting a user to lean the scooter into a turn, etc. In the '687 patent, the rear wheels are fixedly mounted in place and the frame is configured such that there is no independent movement of the position of the rear wheels. The platforms are disadvantageously small and do not promote lateral positioning by a user.

The prior art also includes tricycles and like devices that may have a front wheel, a pair of rear wheels, a seat, and a rear platform or frame member that extends between the rear wheels and provides enhanced structural connection between the rear wheels.

The scooter devices of the prior art are disadvantageous because they teach narrow foot placement platforms that do not give a user more space to move and/or to more casually or carelessly place their feet (or to welcome additional riders or perform stunts, etc.). Scooter devices of the prior art are also disadvantageous in that they do not provide this or like features in a scooter device with biased direction wheels and/or tiltability of the steering mechanism or frame to enhance performance, etc. The prior art is also disadvantageous in not teaching a scooter device that may be folded, readily disassembled, or otherwise made more compact for storage or transport.

The devices of the prior art are also disadvantageous because they do not provide one or more of: tilting of the steering mechanism or foot platforms to improve turning or accentuate the riding experience; direction biased rear wheels; independent or lateral movement of the rear wheel support member to accentuate propulsion efforts; and a flexible structural element efficiently integrated into the frame of the scooter device, among other reasons. Prior art devices also lack adequate braking.

U.S. published Patent Application Specification No. 2007/0170666 of Chen discloses a scooter device propelled by side to side movement of a user according to the preamble of claim 1 that includes a frame structure through which at least a front wheel is coupled to two direction biased rear wheels. The frame structure comprises a foot placement platform that extends laterally between the two rear wheels. The platform may extend over half of the distance between the rear wheels and/or may be substantially continuous for that distance.

PCT published Application Specification No. WO 2007/069879 of Bucay Atri discloses a scooter device which may be ridden by a person standing or kneeling, and can be folded for storage and transport.

U.S. published Application Specification No. 2007/0170686 of Chen discloses a scooter device having a flexible tiltable frame structure and biased direction rear wheels. The scooter is of a type that achieves forward propulsion by side to side movement of a user. The frame structure may include a flexible member or members and/or may incorporate other flexible or moveable components to achieve desired performance. The frame structure and steering mechanism is moveable into a more compact form for storage or transport.

### SUMMARY OF THE INVENTION

Accordingly, it is an object of the present invention to provide a side-to-side movement propelled scooter device that overcomes the disadvantageous aspects of the prior art.

It is another object of the present invention to provide such a scooter device that has a laterally extending foot platform between the two rear wheels.

It is yet another object of the present invention to provide such a scooter device that has biased direction mounted rear wheels.

It is also an object of the present invention to provide such a scooter device that may have a releasable frame structure, a flexible frame, a tiltable steering mechanism and/or a foldable frame.

These and related objects of the present invention are achieved by a scooter according to the invention propelled by side-to-side movement of a user, and comprising at least a first forward located wheel, at least a second rearward located wheel, and at least a third rearward located wheel, the second and third rearward located wheels being mounted in a biased direction arrangement, a frame structure through which the first wheel is coupled to the second and third wheels, the scooter also including a central support shaft, and a steering mechanism that has a vertically ascending control member and is coupled to the first wheel such that turning of the control member achieves a turning of the first wheel,
a first platform section that extends substantially laterally from the central support shaft to the second wheel, and
a second platform section that extends substantially laterally from the central support shaft to the third wheel,
wherein
the first and second platform sections in use are detachably coupled to the central support shaft,
the first platform section including:
a first plate that is coupled to the first platform section and releasably attached to the central support shaft via screws,
the second platform section including:
   a second plate that is coupled to the second platform section and releasably attached to the central support shaft via screws, and
   the first plate and the second plate are fashioned with a groove and each platform section has a protrusion that slides into and releasably locks within the groove.

The attainment of the foregoing and related advantages and features of the invention should be more readily apparent to those skilled in the art, after review of the following more detailed description of the invention taken together with the drawings.

### BRIEF DESCRIPTION OF THE DRAWINGS

Figs. 1-3 illustrate a side elevation, a bottom perspective, and a rear perspective view of a scooter device which is not in accordance with the present invention.
Fig. 4 is a bottom perspective view of a rear wheel of the scooter device of Figs. 1-3.
Figs. 5-7 illustrate a side elevation view, a top perspective view and a front perspective view (in a folded position) of a scooter device, which is also not in accordance with the present invention.
Figs. 8-12 are top plan views of the rear portion of a scooter device which is not in accordance with the present invention. Figs. 13-15 illustrate a scooter device in accordance with the present invention with an expanded user platform.
Fig. 16 is a perspective view of the scooter device of Figs. 5-7 with a braking arrangement.

### DETAILED DESCRIPTION

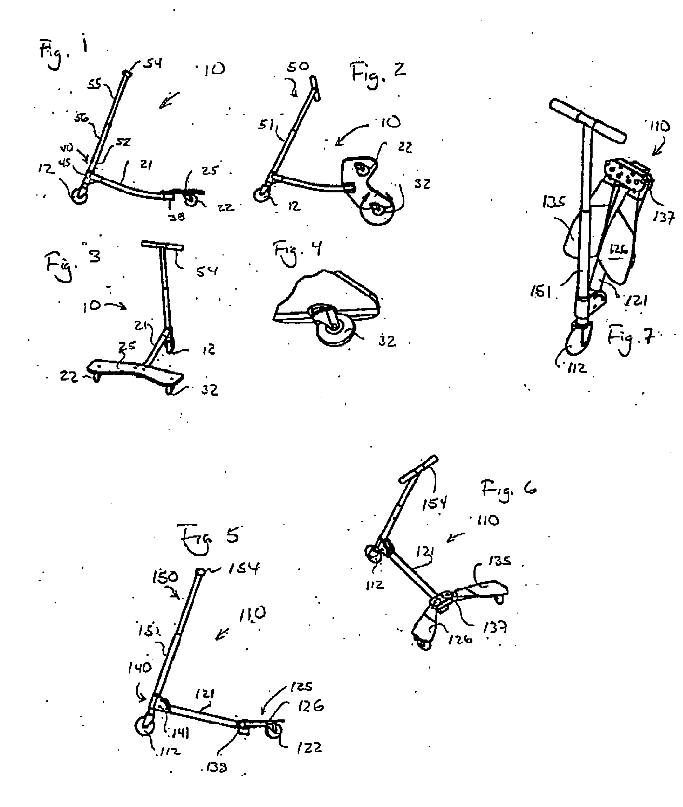

Referring to Figs- 1-3, a side elevation, a bottom perspective, and a rear perspective view of a scooter device which is not in accordance with the present invention are respectively shown. The scooter device 10 may include a frame structure 20 that is coupled to a steering mechanism 50 and supports at least a front wheel 12 and at least two rear wheels 22, 32. Frame structure 20 may include a joint structure 40 from which a substantially longitudinally disposed (i.e., line of direction) support extends. In the embodiment of Figs. 1-3, the longitudinally disposed support is configured as a single support arm 21 though it may be configured as multiple support arms or other structure that connects to and extends between the steering mechanism and the extended platform. Support arm 21 may be non-movably coupled to steering mechanism 50 (shown in Figs. 1-3) or movably coupled through pivot 41 (shown in Figs. 5-7) or otherwise coupled.

Joint structure 40 may also include a cylindrical shell 45 or the like through which shaft 52. of steering mechanism 50 may extend. Steering shaft 52 may couple to wheel 12 on one end and ascend vertically to a handlebar 54 at its other end. It may include multiple (telescoping or otherwise configured) sections 55,56 and a height adjustment mechanism (not shown but known in the art).

Scooter device 10 may have a user platform 25 that is coupled to and may be positioned substantially perpendicularly to support arm 21. Platform 25 of Figs. 1-3 preferably extends between the rear wheels 22,32 and provides "standing space" for a user. Platform 25 provides a large, substantially unimpeded surface area that permits a user to carefreely place their feet, ride on one side or the other, invite other riders, and perform stunts with greater foot placement possibilities, etc.

Support arm 21 may be fixedly coupled to platform 25 or through a biased cam 38 or the like that permits movement of the support arm relative to the platform. The biased cam permits movement in response to physical stress, but return to an initial position in the absence of the displacement stress. Since the support arm is coupled to the steering mechanism, a biased cam or like arrangement permits the steering mechanism to tilt relative to the user platform, permitting, for example, a user to lean the steering mechanism into a turn, etc.

Alternatively, forming all or a section of support arm 21 of a rigid yet flexible material (elastic properties), such as fiberglass or flexible metal or polyurethane or the like permits the steering mechanism to move relative to the platform, for example, permitting a user to lean the steering mechanism into a curve.

The provision of platform 25 with support arm 21 (as shown in Figs. 1-3) generally forms the letter "T" or a broad "Y" when viewed from above, with platform members extending out to the side, i.e., laterally from the central support arm. The platform may have different configurations including being round, rectangular, elliptical, or amorphous, etc., without departing from the present invention.

Fig. 4 illustrates rear wheel 22 (or 32) mounted in a forward tilted caster arrangement. This arrangement achieves a wheel that is capable of turning via rotation about its mounting shaft, yet which self-returns to the line of direction at which it is mounted. Shelf-returning wheels of this type or a spring bias type are known in the art.

Referring to Figs. 5-7, a side elevation view, a top perspective view and a front perspective view (in a folded position) of another scooter device 110 which is also not in accordance with the present invention are respectively shown.

Scooter device 110 may include many of the features of scooter device 10 and other scooter devices described herein. For example, device 110 may include a steering mechanism 150 with a shaft 151 and handle bar 154, a front wheel 112 and two rear wheels 122,132, and a single (or multiple) central support arm 121 that extends to a user platform 125. The user platform 125 may be fixedly or removably coupled to the support arm or coupled through a biased cam or the like 138 that provides a flexible coupling of the platform to the support arm. Rear wheels 122,132 are preferably mounted through tilted casters or the like as discussed elsewhere herein.

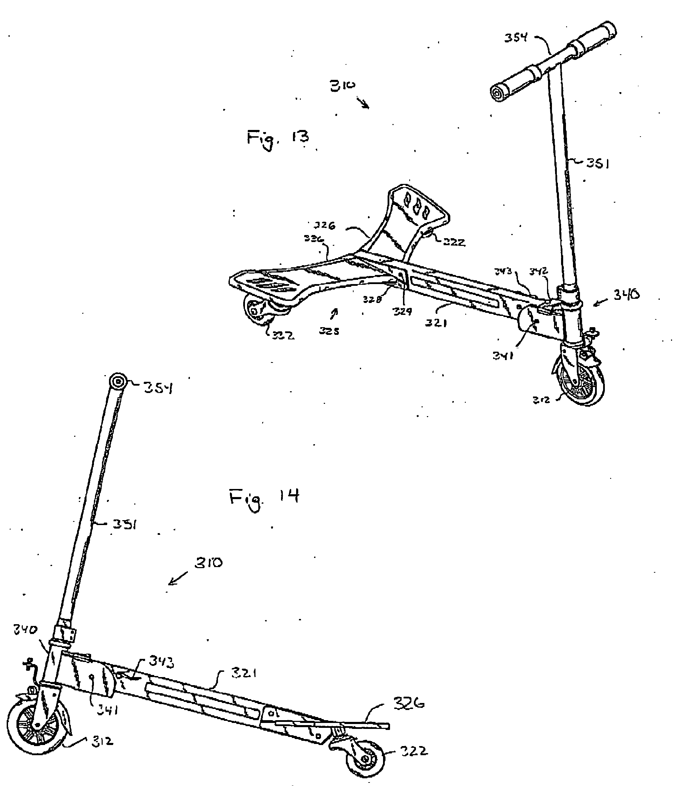

The platform 125 may include' two foot placement sections 126,136 respectively supporting rear wheels 122,132. These foot placement sections 126,136 may be pivotally coupled to a central mount structure 137, and configured to permit release and folding into the position indicated in Fig. 7. Support arm 121 may be pivotally coupled to steering mechanism 150 at joint structure 140 and folded via releasably pivot 141 into the folded position indicated in Fig. 7. Alternatively, the foot placement sections 126,136 may be detachably coupled to the support arm as discussed in more detail with reference to Figs. 13-15.

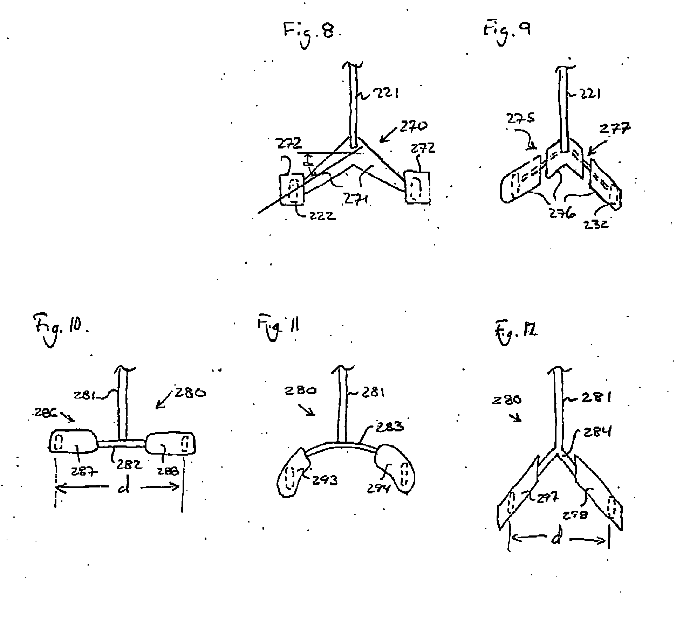

Referring to Figs. 8-12, top plan views of the rear portion of, three other scooter devices none of which are in accordance with the present invention, illustrating different user platforms, are respectively shown.

Fig. 8 illustrates a platform 270 having a wide or laterally extending Y or V-shaped configuration and with two tapered platform members 271'that lead to larger foot placement regions 272 towards their periphery.

Fig. 8 illustrates an angle, α, between a line perpendicular to the longitudinal axis of the support arm 221 (i.e., the line of direction of the scooter) and the primary axis (from a center of the platform member at the support arm to the center of the respective wheel) of the platform member 271. The prior art discloses narrow substantially longitudinally disposed platform members such as those in the '121 patent mentioned above. In accordance with the present invention which is described with reference to Figs 13 to 15, the platform members are substantially laterally disposed, with α being less than 45 degrees. The angle, a, may also be greater than 45 degrees yet within the present invention if less than the substantially longitudinally disposed platform members of the prior art. In the scooter device of Fig. 8, α may range from 5 to 45 degrees or from 10 to 35 degrees.

Fig. 9 illustrates a platform 275 having multiple sections 276 mounted on a laterally extending frame member 277. In aggregate, these sections constitute a substantially continuous platform extending from above one rear wheel to above the other.

Referring to Figs. 10-12, top plan views of he rear portion of three other scooter devices which are not in accordance with the present invention, illustrating different frame arrangements and user platforms, are respectively shown. Fig. 10 illustrates a frame structure 280 that includes a principal longitudinally disposed support arm 281 (similar to support arm 221) and a laterally extending support member that may be straight 282, U-shaped (curved) 283, V-shaped 284 (Figs. 10-12, respectively) or otherwise configured. In Fig. 12, angle α is approaching 45 degrees.

In Fig. 10, the user platform 286 is provided in two elongated.sections 287,288 that extend towards each other. Figs. 11-12 also illustrate platforms with elongated sections 293,294 and 297,298, respectively. If the rear wheels are spaced by a distance, d, the combined length of the elongated platform sections, in a lateral dimension substantially perpendicular to the longitudinal line-of-direction of the scooter device, is preferably 1/2 or more of distance d and, in some embodiments, approximately 2/3 or more of distance d.

The curved or angled embodiments, the elongated platforms, and the substantially continuous platform arrangements, etc., accommodate ready use by different sized users. For example, a 5 year old, being of smaller frame may stand with his or her feet closer to the inside than a larger frame user.

Referring to Figs. 13-15, a perspective, a side elevation and a top plan view of another embodiment of a scooter device 310 in accordance with the present invention is shown. Scooter device 310 may include a front wheel 312, direction biased rear wheels 322,332, a central support shaft 321, a user platform 325, a joint structure 340, and a steering shaft 351 and handle 354. These components preferably function and may be made in a matter similar to their related components discussed herein with reference to other embodiments.

The user platform may include two platforms sections 326,336 and these may be releasably coupled to support arm 321. In one method of releasable attachment, the user platform sections may each be coupled to a plate 328 and the plate coupled to support arm 321 via screws or the like 329. In another embodiment, plate 328 may be fashioned with a groove 327 and each user platform section may have a protrusion that slides into and releasably locks within the groove.

The joint structure 340 may include a pivot 341 about which the support arm and steering shaft may rotate to form a more compact shape, for example, as illustrated in Fig. 7. A pivot bracket or housing 342 and a releasable latch 343 are preferably provided to facilitate proper operation of the pivot. The ability to pivot the steering shaft onto the support arm and remove the user platform sections achieves a compact shape for transport and storage yet yields a functional device with high structural integrity when unfolded and/or assembled for operation.

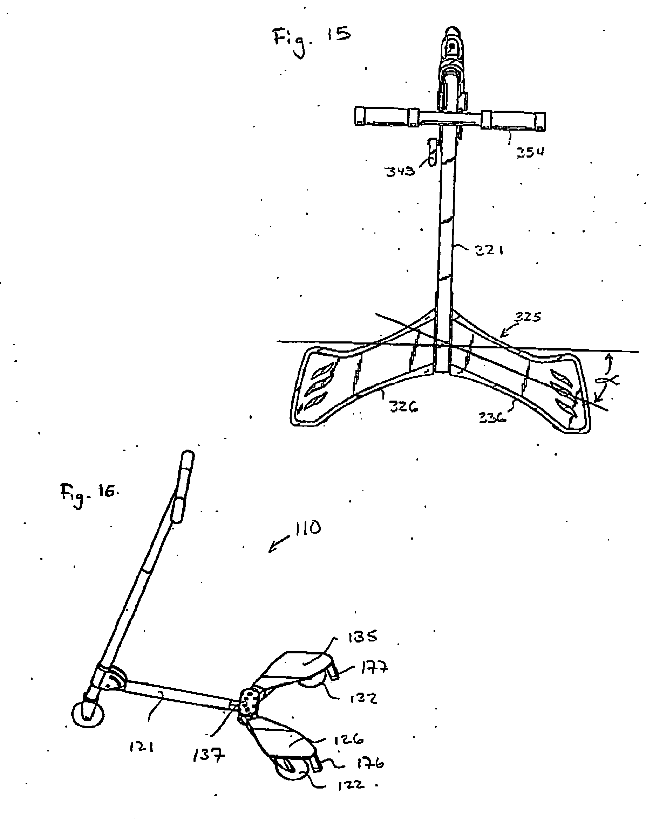

The user platform sections may extend laterally, for example, as shown in the top plan view of Fig. 15, from the support arm with an angle, α, of 5-45 degrees and more preferably of approximately 10-30 or 35 degrees.

Referring to Fig. 16, a perspective view of scooter device 110 of Figs. 5-7 with a braking arrangement is shown. In the device of Fig. 16, the central mount structure 137 may be coupled to support arm 121 such that the mount structure 137 and platform section 126, 135 rotate or pivot downward relative to support arm 121 when a user leans backwards on the platform (the mount structure may be biased towards an initial position). Stated otherwise, the mount structure and/or platform sections may be configured such that when a user leans on the rear portions of the platform sections, over break extension 176, 177 the platform sections pivot downward from the mount structure permitting the brake extensions to contact the ground, thereby braking the scooter device.

With respect to materials, the various components of the scooter device may be made with known materials. The frame is preferably made of a lightweight rigid, durable material such as aluminum or other metal or alloys thereof. A flexible frame member may be made of fiberglass, a flexible metal or other. Platforms may be made of metal, plastic or of the same material used to make skateboard platforms, among other materials.

While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinbefore set forth, and as fall within the scope of the invention and the limits of the appended claims.

## Claims

1. A scooter device propelled by side to side movement of a user, comprising at least a first forward located wheel (312), at least a second rearward located wheel (322), and at least a third rearward located wheel (332), the second and third rearward located wheels (322,332) being mounted in a biased direction arrangement, a frame structure through which the first wheel (312) is coupled to the second and third wheels (322,332), the scooter also including a central support shaft (321), and a steering mechanism that has a vertically ascending control member (351) and is coupled to the first wheel (312) such that turning of the control member (351) achieves a turning of the first wheel (312),
a first platform section (326) that extends substantially laterally from the central support shaft (321) to the second wheel (322), and
a second platform section (336) that extends substantially laterally from the central support shaft (321) to the third wheel (332),
**characterised in that**
the first (326) and second (336) platform sections in use are detachably coupled to the central support shaft, **characterized by**:
the first platform section (326) including:
a first plate (328) that is coupled to the first platform section (326) and releasably attached to the central support shaft (321) via screws (329),
the second platform section (336) including:
a second plate (328) that is coupled to the second platform section (336) and releasably attached to the central support shaft (321) via screws (329), and
the first plate and the second plate (328) are fashioned with a groove (327) and each platform section (326,336) has a protrusion that slides into and releasably locks within the groove (327).

2. The scooter device as claimed in Claim 1 wherein the second and third rearwardly located wheels (322,332) are mounted in a forward tilted castor arrangement.

3. The scooter device as claimed in Claim 1 wherein the biased direction wheel arrangement (322,332) includes spring biased wheels.

4. The scooter device of claim 1, wherein each of the first platform section (326) and the second platform section (336) have a lateral dimension that is greater than its longitudinal dimension..

5. The scooter device as claimed in any preceding claim wherein the first platform section (326) is coupled to the first plate (328).

6. The scooter device as claimed in any preceding claim wherein the second platform section (336) is coupled to the second plate (328).

7. The scooter device as claimed in any preceding claim wherein the first platform section (326) includes the first plate (328) and the first protrusion.

8. The scooter device as claimed in any preceding claim wherein the second platform section (336) includes the second plate (328) and the second protrusion.

9. The scooter device as claimed in any preceding claim wherein the central support shaft (321) is formed of a lightweight rigid, durable material that is aluminium, another metal or an alloy thereof.

10. The scooter device as claimed in any preceding claim wherein the central support shaft (321) has in part two substantially planar and vertically disposed sides that are substantially parallel to one another, and a substantially planar top surface that is substantially perpendicular to the two vertically disposed sides.

11. The scooter device as claimed in Claim 10 wherein the vertical dimension of each vertically disposed side of the central support shaft (321) is greater than the lateral width dimension of the top surface thereof.

12. The scooter device as claimed in any preceding claim further comprising:
a joint structure (340) including a pivot (341) about which the central support shaft (321) and the ascending control member (351,354) rotate to form a more compact shape, and
a releasable pivot latch (343) that facilitates proper operation of the pivot (341).

13. The scooter device as claimed in any preceding claim wherein the principal axes of the first platform section (326) and the second platform section (336) are disposed backward of a line perpendicular to the longitudinal axis of the central support shaft (321) at an angle (α), of between 10 degrees and 30 degrees.

14. The scooter device as claimed in any preceding claim wherein the first and second platform sections (326, 336) are positioned above the second and third wheels (322, 332).

15. The scooter device as claimed in any preceding claim wherein the central support shaft (321) is disposed longitudinally and the first and second platform sections (326,336) are directly and releasably coupleable to the rearward end of the longitudinally disposed central support shaft (321) so as to be independently removable from the central support shaft (321).

## Patentansprüche

1. Rollervorrichtung, die durch eine Bewegung eines Benutzers von Seite zu Seite angetrieben wird, umfassend wenigstens ein erstes in Richtung nach vorne angeordnetes Rad (312), wenigstens ein zweites in Richtung nach hinten angeordnetes Rad (322) und wenigstes ein drittes in Richtung nach hinten angeordnetes Rad (332), wobei das zweite und das dritte nach hinten angeordnete Rad (322, 332) In einer Anordnung mit Vorspannungsrichtung angebracht sind, eine Rahmenstruktur, durch die das erste Rad (312) mit dem zweiten und dritten Rad (322, 332) gekoppelt ist, wobei der Roller ferner eine zentrale Stützwelle (321) umfasst und einen Lenkmechanismus, der ein vertikal aufsteigendes Steuerelement (351) aufweist und mit dem ersten Rad (312) derart gekoppelt ist, dass ein Drehen des Lenkelements (351) ein Drehen des ersten Rads (312) bewirkt,
einen ersten Plattformabschnitt (326), der sich im Wesentlichen lateral von der zentralen Stützwelle (321) zu dem zweiten Rad (322) hin erstreckt, und
einen zweiten Plattformabschnitt (336), der sich im Wesentlichen lateral von der zentralen Stützwelle (321) zu dem dritten Rad (332) hin erstreckt,
**dadurch gekennzeichnet,**
**dass** der erste (326) und zweite (336) Plattformabschnitt im Gebrauch entfernbar mit der zentralen Stützwelle gekoppelt sind,
weiter **gekennzeichnet dadurch, dass** der erste Plattformabschnitt (326) umfasst:
eine erste Platte (328), die mit dem ersten Plattformabschnitt (326) gekoppelt und entfernbar an der zentralen Stützwelle (321) über Schrauben (329) angebracht ist,
wobei der zweite Plattformabschnitt (336) umfasst:
eine zweite Platte (328), die mit dem zweiten Plattformabschnitt (336) gekoppelt und lösbar an der zentralen Stützwelle (321) über Schrauben (329) angebracht ist,
wobei die erste Platte und die zweite Platte (328) mit einer Vertiefung (327) versehen sind und jeder Plattformabschnitt (326, 336) einen Vorsprung aufweist, der in die Vertiefung (327) hineingleitet und innerhalb dieser lösbar verriegelt.

2. Rollervorrichtung nach Anspruch 1, wobei das zweite und das dritte nach hinten gerichtete Rad (322, 332) in einer nach vorne geschwenkten Schwenkrollenanordnung angebracht sind.

3. Rollervorrichtung nach Anspruch 1, wobei die richtungsvorgespannte Radanordnung (322, 332) federvorgespannte Räder aufweist.

4. Rollervorrichtung nach Anspruch 1, wobei der erste Plattformabschnitt (326) und der zweite Plattformabschnitt (336) eine seitliche Dimensionierung aufweisen, die größer als die Längsdimensionierung ist.

5. Rollervorrichtung nach einem der vorangehenden Ansprüche, wobei der erste Plattformabschnitt (326) mit der ersten Platte (328) gekoppelt ist.

6. Rollervorrichtung nach einem der vorangehenden Ansprüche, wobei der zweite Plattformabschnitt (336) mit der zweiten Platte (328) gekoppelt ist.

7. Rollervorrichtung nach einem der vorangehenden Ansprüche, wobei der erste Plattformabschnitt (326) die erste Platte (328) und den ersten Vorsprung umfasst.

8. Rollervorrichtung nach einem der vorangehenden Ansprüche, wobei der zweite Plattformabschnitt (336) die zweite Platte (328) und den zweiten Vorsprung umfasst.

9. Rollervorrichtung nach einem der vorangehenden Ansprüche, wobei die zentrale Stützwelle (321) aus einem leichtgewichtigen, steifen, belastbaren Material ausgebildet ist, das Aluminium, ein anderes Metall oder eine Legierung daraus ist.

10. Rollervorrichtung nach einem der vorangehenden Ansprüche, wobei die zentrale Stützwelle (321) zum Teil zwei im Wesentlichen planar angeordnete Seiten aufweist, die im Wesentlichen parallel zueinander verlaufen, und eine im Wesentlichen ebene Oberfläche aufweist, die im Wesentlichen senkrecht zu den beiden vertikal angeordneten Seiten verläuft.

11. Rollervorrichtung nach Anspruch 10, wobei die vertikale Dimensionierung jeder der vertikal angeordneten Seiten der zentralen Stützwelle (321) größer als die seitliche Weitendimensionierung der oberen Oberfläche davon ist.

12. ollervorrichtung nach einem der vorangehenden Ansprüche, ferner umfassend:
eine Verbindungsstruktur (340), die ein Schwenkgelenk (341) aufweist, um das die zentrale Stützwelle (321) und das aufsteigende Lenkelement (351, 354) drehbar sind, um eine kompaktere Form zu erhalten, und
einen lösbaren Schwenkverschluss (343), der eine einfache Bedienung des Schwenkgelenks (341) ermöglicht.

13. Rollervorrichtung nach einem der vorangehenden Ansprüche, wobei die Grundachsen des ersten Plattformabschnitts (326) und des zweiten Plattformabschnitts (336) hinter einer Linie angeordnet sind, die senkrecht zu der Längsachse der zentralen Stützwelle (321) in einem Winkel (α) von zwischen 10° und 30° verläuft.

14. Rollervorrichtung nach einem der vorangehenden Ansprüche, wobei der erste und zweite Plattformabschnitt (326, 336) oberhalb des zweiten und dritten Rads (322, 332) angeordnet sind.

15. Rollervorrichtung nach einem der vorangehenden Ansprüche, wobei die zentrale Stützwelle (321) in Längsrichtung angeordnet ist und wobei der erste und zweite Plattformabschnitt (326, 336) direkt und lösbar mit dem hinteren Ende der in Längsrichtung angeordneten zentralen Stützwelle (321) gekoppelt ist, um unabhängig von der zentralen Stützwelle (321) entfernbar zu sein.

## Revendications

1. Dispositif de trottinette propulsé par un mouvement latéral d'un utilisateur, comprenant au moins une première roue située en avant (312), au moins une deuxième roue située à l'arrière (322), et au moins une troisième roue située à l'arrière (332), les deuxième et troisième roues situées à l'arrière (322, 332) étant montées dans un agencement de direction sollicitée, une structure de cadre à travers laquelle la première roue (312) est couplée aux deuxième et troisième roues (322, 332), la trottinette comportant également un arbre-support central (321), et un mécanisme de direction qui a un élément de commande ascendant verticalement (351) et est couplée à la première roue (312) de sorte que le pivotement de l'élément de commande (351) réalise un pivotement de la première roue (312),
une première section de plate-forme (326) qui s'étend essentiellement de manière latérale à partir de l'arbre-support central (321) à la deuxième roue (322), et
une deuxième section de plate-forme (336) qui s'étend essentiellement de manière latérale à partir de l'arbre-support central (321) à la troisième roue (332),
**caractérisé en ce que**
les première (326) et deuxième (336) sections de plate-forme, en cours d'utilisation, sont couplées de manière amovible à l'arbre-support central, **caractérisé par** :
la première section de plate-forme (326) comportant :
une première plaque (328) qui est couplée à la première section de plate-forme (326) et fixée de manière amovible à l'arbre-support central (321) par l'intermédiaire de vis (329),
la deuxième section de plate-forme (336) comportant :
une deuxième plaque (328) qui est couplée à la deuxième section de plate-forme (336) et fixée de manière amovible à l'arbre-support central (321) par l'intermédiaire de vis (329), et
la première plaque et la deuxième plaque (328) sont façonnées avec une rainure (327) et chaque section de plate-forme (326, 336) a une saillie qui glisse dans la rainure (327) et se bloque de manière amovible à l'intérieur de celle-ci.

2. Dispositif de trottinette tel que revendiqué dans la revendication 1, dans lequel les deuxième et troisième roues situées à l'arrière (322, 332) sont montées dans un agencement de roulette inclinée vers l'avant.

3. Dispositif de trottinette tel que revendiqué dans la revendication 1, dans lequel l'agencement de roue de direction sollicitée (322, 332) comporte des roues sollicitées par ressort.

4. Dispositif de trottinette de la revendication 1, dans lequel chacune de la première section de plate-forme (326) et de la deuxième section de plate-forme (336) ont une dimension latérale qui est supérieure à sa dimension longitudinale.

5. Dispositif de trottinette tel que revendiqué dans l'une des revendications précédentes, dans lequel la première section de plate-forme (326) est couplée à la première plaque (328).

6. Dispositif de trottinette tel que revendiqué dans l'une des revendications précédentes, dans lequel la deuxième section de plate-forme (336) est couplée à la deuxième plaque (328).

7. Dispositif de trottinette tel que revendiqué dans l'une des revendications précédentes, dans lequel la première section de plate-forme (326) comporte la première plaque (328) et la première saillie.

8. Dispositif de trottinette tel que revendiqué dans l'une des revendications précédentes, dans lequel la deuxième section de plate-forme (336) comporte la deuxième plaque (328) et la deuxième saillie.

9. Dispositif de trottinette tel que revendiqué dans l'une des revendications précédentes, dans lequel l'arbre-support central (321) est formé d'un matériau léger rigide et durable qui est de l'aluminium, un autre métal ou un alliage de ceux-ci.

10. Dispositif de trottinette tel que revendiqué dans l'une des revendications précédentes, dans lequel l'arbre-support central (321) a, en partie, deux côtés essentiellement plans et disposés verticalement qui sont essentiellement parallèles l'un à l'autre, et une surface supérieure essentiellement plane qui est essentiellement perpendiculaire aux deux côtés disposés verticalement.

11. Dispositif de trottinette tel que revendiqué dans la revendication 10, dans lequel la dimension verticale de chaque côté disposé verticalement de l'arbre-support central (321) est supérieure à la dimension de largeur latérale de sa surface supérieure.

12. Dispositif de trottinette tel que revendiqué dans l'une des revendications précédentes, comprenant en outre :
une structure de joint (340) comportant un pivot (341) autour duquel l'arbre-support central (321) et l'élément de commande ascendant (351, 354) tournent afin d'obtenir une forme plus compacte, et
un verrou de pivot amovible (343) qui facilite le bon fonctionnement du pivot (341).

13. Dispositif de trottinette tel que revendiqué dans l'une des revendications précédentes, dans lequel les axes principaux de la première section de plate-forme (326) et de la deuxième section de plate-forme (336) sont disposés en arrière d'une ligne perpendiculaire à l'axe longitudinal de l'arbre-support central (321) à un angle (α), compris entre 10 degrés et 30 degrés.

14. Dispositif de trottinette tel que revendiqué dans l'une des revendications précédentes, dans lequel les première et deuxième sections de plate-forme (326, 336) sont positionnées au-dessus des deuxième et troisième roues (322, 332).

15. Dispositif de trottinette tel que revendiqué dans l'une des revendications précédentes, dans lequel l'arbre-support central (321) est disposé longitudinalement et les première et deuxième sections de plate-forme (326, 336) peuvent être couplées directement et de manière amovible à l'extrémité arrière de l'arbre-support central disposé longitudinalement (321) de manière à être amovibles de façon indépendante de l'arbre-support central (321).
